# DEMANDE DE BREVET EUROPEEN

(11) **EP 2 639 421 A1**
(43) Date de publication de la demande: **18.09.2013**
(21) Numéro de dépôt: 13155013.9
(22) Date de dépôt: 13.02.2013
(51) Int. Cl.: F01N 3/20

(54) **Reservoir de stockage et procede de detection de changement de reservoir**

(30) Priorité: 13.03.2012 FR 1252233
(71) Demandeur: PEUGEOT CITROËN AUTOMOBILES SA, 78140 Velizy-Villacoublay (FR)
(72) Inventeur: Dubois, Vincent, 92200 Neuilly sur Seine (FR)

(57) **Abrégé**

L'invention concerne un réservoir de stockage (3, 6) comprenant un circuit électrique (4, 7), caractérisé en ce que le circuit électrique (4, 7) est solidaire du réservoir (3, 6) et agencé de sorte à se modifier définitivement au cours de sa toute première alimentation électrique.

L'invention porte aussi sur un procédé de détection de changement réservoir de stockage, un système (1) de réduction catalytique sélective des oxydes d'azote mettant en oeuvre le procédé et un véhicule comprenant un tel système.

## Description

### Domaine technique de l'invention

La présente invention se rapporte à un réservoir de stockage comprenant un circuit électrique, un procédé de détection de changement de réservoir. L'invention se rapporte encore à un procédé de détection de changement réservoir de stockage, un système de réduction catalytique sélective des oxydes d'azote mettant en oeuvre le procédé et un véhicule comprenant un tel système.

### Arrière-plan technologique

Le système de réduction catalytique sélective (encore désigné par l'acronyme SCR) est une des solutions possibles pour le post-traitement des NOₓ, c'est-à-dire des oxydes d'azote sur moteur Diesel. Le principe d'un tel système est de réduire chimiquement les oxydes d'azote, NOx, en ajoutant un agent réducteur tel que de l'ammoniac, NH₃ en amont d'un catalyseur spécifique, désigné catalyseur SCR, et ainsi de permettre à ce type de moteur de respecter des niveaux d'émissions de plus en plus stricts.

La réduction des oxydes d'azote par l'ammoniac selon les réactions de réduction catalytique sélective est une méthode bien connue et largement utilisée dans l'industrie, notamment dans des usines stationnaires. Appliquée à l'automobile, la difficulté de la réduction catalytique sélective est d'apporter dans l'échappement l'ammoniac nécessaire à la réduction des oxydes d'azote, NOₓ. Il est nécessaire de stocker cet agent réducteur sur le véhicule. Pour cela, plusieurs concepts ont été développés pour embarquer l'ammoniac par exemple sous forme d'urée solide, sous forme d'urée liquide en solution aqueuse ou encore sous forme de carbamate d'ammonium.

Il existe aujourd'hui différentes architectures de système de réduction catalytique sélective comprenant au moins un réservoir comportant lui-même des sels absorbant l'ammoniac. Chacun de ces systèmes comprend un calculateur spécifique qui pilote l'injection.

Une problématique de ces systèmes est que leur(s) réservoir(s) n'est pas dimensionné pour garantir une autonomie équivalente à la durée de vie du véhicule. Il faut donc les recharger ou remplacer par des réservoirs pleins fréquemment. Pour offrir une capacité de maintenance à certains clients sachant qu'une autonomie nulle équivaut à l'arrêt forcé du véhicule selon les normes européennes, il est donc important de rendre l'opération de rechargement / remplacement réalisable par un client non expert.

On connait du document DE102009060286 un véhicule doté d'un système de réduction catalytique sélective des oxydes d'azote comprenant des cartouches de stockage d'ammoniac placées à un endroit accessible par l'utilisateur. La cartouche peut donc être remplacée aisément par un client non expert. Le document prévoit par ailleurs l'envoi d'un signal de remplacement vers le conducteur et/ou le diagnostic embarqué en cas de basculement vers une autre cartouche mais reste muet sur les moyens mis en oeuvre.

Une solution actuelle pour déterminer si une cartouche de stockage vide a été changée par une cartouche pleine est de procéder au bilan de masse entre la masse actuelle de la cartouche et la masse lorsqu'elle était pleine. Cependant, la mesure de la masse des réservoirs n'est pas envisagée pour une application automobile en raison de la difficulté technologique.

Il existe donc un besoin pour détecter de manière fiable et économique le changement de cartouches de stockage d'agent réducteur du véhicule.

L'invention porte ainsi sur un réservoir de stockage comprenant un circuit électrique, **caractérisé en ce que** le circuit électrique est solidaire du réservoir et agencé de sorte à se modifier définitivement au cours de sa toute première alimentation électrique.

De préférence, le circuit électrique est équipé d'un fusible dont la fonte au cours de la toute première alimentation électrique modifie ledit circuit électrique.

De préférence encore, le fusible est calibré de sorte à fondre définitivement dans une fenêtre de temps prédéterminée au cours de la toute première alimentation électrique.

Dans une variante, le circuit électrique comprend des moyens de chauffage électrique du réservoir, la modification du circuit électrique n'affectant pas le bon fonctionnement des moyens de chauffage.

Dans une autre variante, le réservoir comprend un substrat solide apte à stocker un agent réducteur ou un précurseur d'agent réducteur des oxydes d'azote et à le relâcher sous forme gazeuse sous l'effet d'un chauffage par les moyens de chauffage.

De préférence, l'agent réducteur est de l'ammoniac.

L'invention porte aussi sur un procédé de détection de changement réservoir de stockage selon l'une des revendications précédentes comprenant:
- Une étape d'activation de l'alimentation du circuit électrique,
- Une étape de mesure d'une réponse électrique du circuit électrique alimenté,
- Une étape de détection d'un changement avéré de réservoir en cas de changement de la réponse électrique d'une première réponse électrique prédéterminée à une seconde réponse électrique prédéterminée.

De préférence, l'activation de l'alimentation du circuit électrique est réalisée pendant une durée d'activation choisie de sorte à entrainer la détection de changement de la réponse électrique et ne pas entrainer une augmentation significative de la température du réservoir.

Dans une variante où le réservoir est compris dans un système de réduction catalytique sélective des oxydes d'azote, le procédé est mis en oeuvre dès la mise en service dudit système.

L'invention porte aussi sur un système de réduction catalytique sélective des oxydes d'azote comprenant un réservoir de l'invention et des moyens de commandes relié au circuit électrique, les moyens de commandes étant configurés pour mettre en oeuvre le procédé de l'invention.

L'invention porte encore sur un véhicule comprenant un système de réduction catalytique sélective des oxydes d'azote de l'invention.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un système de réduction catalytique sélective des oxydes d'azote de l'invention.
- La figure 2 est une représentation schématique d'un exemple préféré d'agencement de circuit électrique des moyens de chauffage.
- La figure 3 présente un exemple de comportement de la tension U et du courant I mesuré aux bornes A, B du circuit électrique illustré en figure 2, au cours de la toute première activation des moyens de chauffage du réservoir.
- La figure 4 illustre la tension U et le courant I mesuré aux bornes A, B du circuit électrique, une fois le fusible fondu, au cours d'une activation des moyens de chauffage autre que la toute première activation.

### Description détaillée

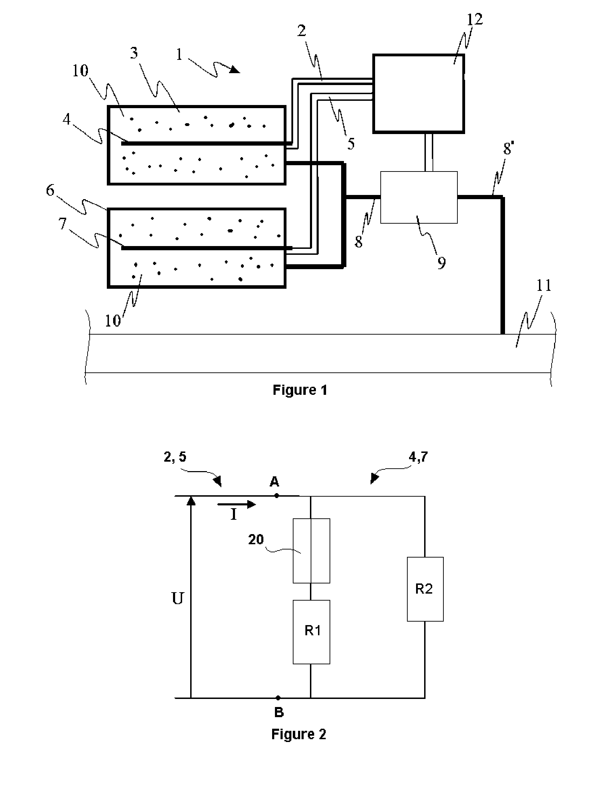

La figure 1 présente un système 1 de réduction catalytique des oxydes d'azote relié à une ligne d'échappement 11, tel qu'une ligne de gaz d'échappement d'un moteur à combustion interne, par exemple de véhicule automobile. Le système 1 de réduction catalytique des oxydes d'azote comporte un premier réservoir 3 et un deuxième réservoir 6. Les réservoirs 3, 6 comprennent de préférence un substrat solide 10 apte à stocker un agent réducteur ou un précurseur d'agent réducteur et à relâcher l'agent réducteur ou le précurseur d'agent réducteur sous forme gazeuse sous l'effet d'un chauffage adéquat par des moyens de chauffage. Le substrat solide 10 peut stocker l'agent réducteur ou le précurseur d'agent réducteur par absorption ou adsorption.

L'invention décrite dans ce document est illustrée dans le mode de réalisation préférée d'un système de réduction catalytique sélective des oxydes d'azote avec pour agent réducteur de l'ammoniac stocké dans le réservoir sous forme de gaz. L'ammoniac est préféré car il représente un agent réducteur des oxydes d'azote efficace.

Un tel système de réduction catalytique sélective des oxydes d'azote est particulièrement adapté à la réduction des oxydes d'azote produits par un moteur à combustion interne d'un véhicule automobile. Un tel système de réduction catalytique sélective des oxydes d'azote permet la maitrise et la réalisation de la quantité d'agent réducteur gazeux injectée.

L'invention peut toutefois s'appliquer à l'ensemble des systèmes de réduction catalytique sélective des oxydes d'azote dont l'agent réducteur ou le précurseur d'agent réducteur est stocké dans le réservoir sous forme gazeuse dans un substrat solide.

La figure 1 illustre un système 1 de réduction catalytique des oxydes d'azote à deux réservoirs, mais bien évidemment, le système peut comprendre plus de deux réservoirs.

Le système 1 de réduction catalytique des oxydes d'azote peut aussi ne comprendre qu'un seul réservoir.

Afin de chauffer le substrat solide, les réservoirs 3, 6 comprennent chacun un circuit électrique 4, 7, comprenant des moyens de chauffage tel qu'une résistance électrique.

Les réservoirs 3, 6 sont reliés à une unité de dosage 9, par l'intermédiaire d'une liaison, par exemple une canalisation 8. L'unité de dosage 9 permet d'injecter précisément l'agent réducteur ou le précurseur d'agent réducteur venant des réservoirs 3, 6 dans la ligne d'échappement 10 par l'intermédiaire d'une canalisation 8'.

Le système 1 de réduction catalytique des oxydes d'azote comprend encore des moyens de commande 12 qui pilotent notamment les moyens de chauffage des réservoirs 3, 6 par l'intermédiaire d'un faisceau électrique 2, 5. Chaque faisceau électrique 2, 5 est connecté au circuit électrique 4, 7. Les moyens de commande 12 pilotent aussi l'unité de dosage 9. Les moyens de commande 12 peuvent être des calculateurs distincts ou un calculateur commun assurant la commande des moyens de chauffage des réservoirs 3, 6 et de l'unité de dosage 9.

De préférence, le circuit électrique 4, 7 est solidaire de son réservoir 3, 6, ainsi, lors d'un changement de réservoir, la connexion entre le circuit électrique 4,7 des moyens de chauffage et le moyens de commande 12 se fait au niveau du faisceau électrique 2, 5. De préférence, un réservoir 3, 6, comprend des moyens de fixation rapide avec le faisceau électrique 2, 5 d'une part, la liaison 8 d'autre part. On obtient ainsi un réservoir aisément amovible.

Conformément à l'invention, le circuit électrique 4, 7 est agencé de sorte à se modifier définitivement au cours de sa toute première alimentation électrique. La modification physique du circuit électrique 4, 7 n'affecte pas le bon fonctionnement des moyens de chauffage. La modification physique du circuit électrique se traduit par un passage d'une première réponse électrique prédéterminée à une seconde réponse électrique prédéterminée au cours de sa toute première alimentation normale. Par réponse électrique, on entend la valeur d'une grandeur électrique du circuit électrique 4, 7 lors de sa mise sous tension. De préférence, pour des raisons de simplicité et de précision, le courant I d'alimentation du circuit électrique 4, 7 est la réponse électrique mesurée.

La figure 2 présente un exemple d'agencement de circuit électrique 4, 7 comprenant les moyens de chauffage. Les points A et B représentent les connexions électriques entre le circuit électrique et le faisceau électrique 2, 5. Le circuit électrique comprend une branche électrique principale de résistance principale R2 formant les moyens de chauffage du réservoir et une branche électrique auxiliaire de résistance auxiliaire R1. La branche électrique auxiliaire est équipée d'un fusible 20. Selon l'invention, la fonte du fusible 20 au cours de la toute première alimentation électrique modifie ledit circuit électrique, mais le bon fonctionnement des moyens de chauffage est maintenu car la branche principale est toujours fonctionnelle. Le fusible étant compris dans le circuit électrique 4, 7 celui-ci est donc aussi solidaire de son réservoir 3, 6.

La fonte du fusible 20 au cours de la toute première alimentation électrique du circuit électrique 4, 7 fait passer le circuit électrique de la première réponse électrique prédéterminée à la seconde réponse électrique prédéterminée. On notera que le fusible 20 n'a pas une fonction de protection des moyens de chauffage face par exemple à une surintensité. Ainsi, dans l'invention, la fonte du fusible 20 n'affecte pas le bon fonctionnement des moyens de chauffage. Le fusible présente l'avantage d'être un composant économique.

Dans ce cas, la résistance équivalente R est telle que 1/R = 1/R1 +1/R2, donc la résistance équivalente R est inférieure à la résistance principale R2.

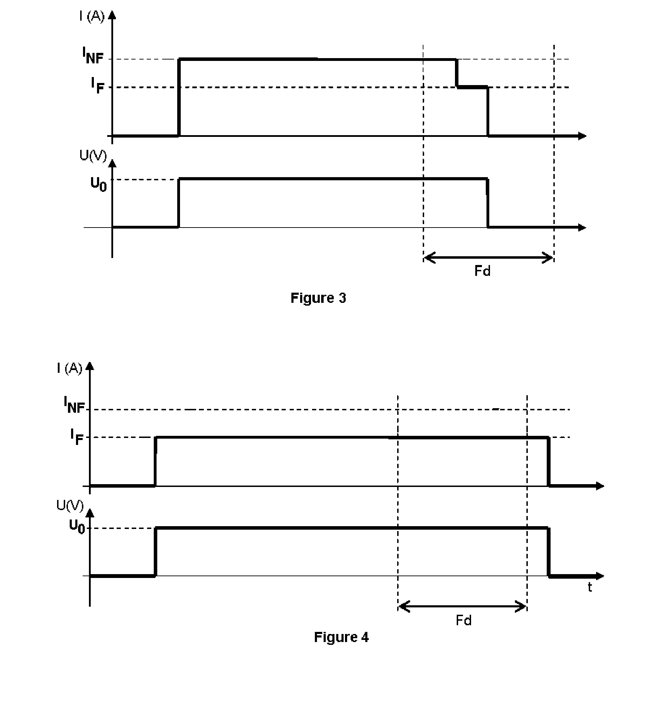

La figure 3 illustre un exemple de comportement de la tension U et du courant I mesurés aux bornes A, B du circuit électrique 4, 7 comprenant les moyens de chauffage et le fusible basé sur l'agencement électrique présenté en figure 2. Dans le circuit électrique 4, 7, les valeurs des résistances R1 et R2 étant connues, les valeurs de courant selon que le fusible 20 est ou non fondu sont tout aussi connues.

Ainsi (cf. figure 3), lorsque le circuit électrique 4, 7 est alimenté par une tension U₀, tant que le fusible 20 est non fondu le courant I a une première valeur attendue I_{NF} pour un circuit avec un fusible 20 non fondu. Cette première valeur initiale attendue I_{NF} correspond à la première réponse électrique prédéterminée. Une fois le fusible 20 fondu, le courant I a une seconde valeur attendue I_{F} pour un circuit avec un fusible 20 fondu. Cette valeur finale attendue I_{F} correspond à la seconde réponse électrique prédéterminée.

Afin de confirmer que ce n'est pas une défaillance, on attend de détecter le changement de réponse électrique caractéristique de la fonte du fusible 20. C'est-à-dire ici de la chute du courant I de la première valeur attendue I_{NF} à la seconde valeur attendue I_{F} pour un circuit avec un fusible 20 fondu. Dès que les moyens de commande 12 détectent la chute de courant, ceux-ci sont informés du changement de réservoir et l'alimentation électrique des moyens de chauffage du réservoir testé peut être interrompue.

Si le fusible 20 est déjà fondu (cf. figure 4), lors de la mise sous tension U₀ des moyens de chauffage, le courant I initial mesuré a la seconde valeur attendue I_{F} pour un circuit avec un fusible 20 fondu dès l'activation du circuit électrique 4, 7.

De préférence, le fusible 20 est calibré de sorte à fondre définitivement dans une fenêtre de temps F_{d} prédéterminée au cours de la toute première alimentation électrique du circuit électrique 4, 7. Grâce à la calibration du fusible 20, aux dispersions connues des moyens de chauffage et du système d'alimentation électrique, il est possible de définir précisément une fenêtre de temps, F_{d}, où la fonte du fusible à lieu et peut donc être détectée suite à l'activation des moyens de chauffage (cf figure 3 et 4). Ainsi, on peut se prémunir de fausse détection.

Dans le cas où le fusible 20 est déjà fondu (cf. figure 4) les moyens de commande 12 sont informés que le réservoir n'a pas été changé. Il y a alors deux possibilités : soit de continuer à alimenter les moyens de chauffage jusqu'à dépasser la fenêtre de détection, F_{d}, soit d'arrêter tout de suite l'alimentation en considérant que la détection de la fonte du fusible 20 est avérée.

Ainsi, lors du remplissage, par exemple en usine ou dans un circuit après-vente, d'un réservoir neuf ou usagé un fusible 20 tout neuf est disposé dans le circuit électrique 4, 7 du réservoir 3, 6. Une fois le réservoir installé dans le système de réduction catalytique sélective du véhicule, ce fusible 20, à la manière d'un sceau, fond lors de la première utilisation du réservoir sur le véhicule, plus exactement lors de la première alimentation du circuit électrique 4, 7.

Lors de chaque démarrage du véhicule et donc du système 1 de réduction catalytique sélective des oxydes d'azote, une activation de l'alimentation électrique des moyens de chauffage est réalisée pour chaque réservoir 3, 6, réservoir par réservoir. De préférence, la durée d'activation est choisie de sorte à être ni trop courte pour entrainer la détection de la fonte du fusible 20, donc du changement de réponse électrique, et ni trop longue pour ne pas augmenter de manière significative la température du réservoir 3 et perturber le fonctionnement du système 1 de réduction catalytique sélective des oxydes d'azote. Avantageusement, la durée d'activation est comprise entre 1 à 10 secondes. Cette durée d'activation peut être ajustée dans cet intervalle de temps en fonction de l'inertie du réservoir 3, 6.

Avantageusement, la durée d'activation est choisie de sorte à ne pas augmenter de plus de 1 °C de la température moyenne du réservoir 3, 6 pour ne pas déclencher intempestivement le dégagement gazeux d'agent réducteur. En fonction, de la tension et du courant mesurés aux bornes du système de chauffe électrique, les moyens de commande 12 détectent la fonte du fusible 20.

Les moyens de commande 12 sont donc configurés pour mettre en oeuvre les étapes principales suivantes :
- Une étape d'activation de l'alimentation du circuit électrique 4, 7,
- Une étape de mesure d'une réponse électrique du circuit électrique 4, 7 alimenté,
- Une étape de détection d'un changement avéré de réservoir en cas de changement de la réponse électrique d'une première réponse électrique prédéterminée à une seconde réponse électrique prédéterminée.

Avantageusement, les moyens de commande 12 peuvent mémoriser le changement avéré de réservoir.

Dans le cas où système 1 de réduction catalytique sélective des oxydes d'azote comprend plusieurs réservoirs, l'activation s'effectue réservoir par réservoir.

Les étapes sont mises en oeuvre à chaque mise en service du système 1 de réduction catalytique sélective des oxydes d'azote afin de vérifier continuellement un éventuel changement de réservoir.

Des agencements de circuits électriques autres que celui présenté en figure 2 peuvent être utilisés tant que la réponse électrique est différente entre l'état initial du circuit électrique et son état modifié suite à sa toute première alimentation électrique.

En variante les moyens de chauffage peuvent être sur un circuit électrique distinct de celui comprenant le fusible

L'invention apporte des avantages dans le domaine de la prestation client. En effet L'invention permet d'avoir un système qui détecte de lui-même un changement de réservoir et d'en conclure que le système comporte un réservoir de nouveau plein. Cela rend possible une procédure simple de changement du réservoir par un client non expert et non équipé de moyen de dialogue avec les moyens de commande, c'est-à-dire avec le calculateur. Le client n'a seulement qu'à physiquement changer le réservoir. Le reste est réalisé automatiquement par le calculateur et est presque instantané au prochain démarrage du véhicule. Ainsi, dans le cas d'un arrêt forcé du véhicule pour manque d'agent réducteur, un client peut se dépanner seul.

## Revendications

1. Réservoir de stockage (3, 6) comprenant un circuit électrique (4, 7), **caractérisé en ce que** le circuit électrique (4, 7) est solidaire du réservoir (3, 6) et agencé de sorte à se modifier définitivement au cours de sa toute première alimentation électrique.

2. Réservoir (3, 6) selon la revendication 1, **caractérisé en ce que** le circuit électrique (4, 7) est équipé d'un fusible (20) dont la fonte au cours de la toute première alimentation électrique modifie ledit circuit électrique (4, 7).

3. Réservoir (3, 6) selon la revendication 2, **caractérisé en ce que** le fusible (20) est calibré de sorte à fondre définitivement dans une fenêtre de temps prédéterminée (F_{d}) au cours de la toute première alimentation électrique.

4. Réservoir (3, 6) selon l'une quelconque des revendications précédentes, **caractérisé en ce que** le circuit électrique (4, 7) comprend des moyens de chauffage électrique du réservoir (3, 6), la modification du circuit électrique (4, 7) n'affectant pas le bon fonctionnement des moyens de chauffage.

5. Réservoir (3, 6) selon l'une quelconque des revendications précédentes, **caractérisé en ce qu'il** comprend un substrat solide (10) apte à stocker un agent réducteur ou un précurseur d'agent réducteur des oxydes d'azote et à le relâcher sous forme gazeuse sous l'effet d'un chauffage par les moyens de chauffage.

6. Réservoir (3, 6) selon l'une quelconque des revendications précédentes, **caractérisé en ce que** l'agent réducteur est de l'ammoniac.

7. Procédé de détection de changement réservoir de stockage selon l'une des revendications précédentes comprenant:
- Une étape d'activation de l'alimentation du circuit électrique (4, 7),
- Une étape de mesure d'une réponse électrique du circuit électrique (4, 7) alimenté,
- Une étape de détection d'un changement avéré de réservoir (3,6) en cas de changement de la réponse électrique d'une première réponse électrique prédéterminée (I_{NF}) à une seconde réponse électrique prédéterminée (I_{F}).

8. Procédé selon la revendication 7, **caractérisé en ce que** l'activation de l'alimentation du circuit électrique (4, 7) est réalisée pendant une durée d'activation choisie de sorte à entrainer la détection de changement de la réponse électrique et ne pas entrainer une augmentation significative de la température du réservoir.

9. Procédé selon la revendication 7 ou la revendication 8, **caractérisé en ce que** le réservoir (3, 6) étant compris dans un système (1) de réduction catalytique sélective des oxydes d'azote, le procédé est mis en oeuvre dès la mise en service dudit système.

10. Système (1) de réduction catalytique sélective des oxydes d'azote, **caractérisé en ce qu'il** comprend un réservoir (3, 6) selon la revendication 5 ou 6 et des moyens de commandes (12) relié au circuit électrique (4, 7), les moyens de commandes (12) étant configurés pour mettre en oeuvre le procédé selon l'une quelconque des revendications 7 à 9.

11. Véhicule comprenant un système (1) de réduction catalytique sélective des oxydes d'azote selon la revendication 10.
